# EUROPEAN PATENT SPECIFICATION

(11) **EP 3 148 170 B1**
(45) Date of publication and mention of the grant of the patent: **25.09.2019**
(21) Application number: 16185981.4
(22) Date of filing: 26.08.2016
(51) Int. Cl.: H04N 1/32, H04N 1/00

(54) **PORTABLE TERMINAL TO MANAGE PRINTER**
TRAGBARE ENDVORRICHTUNG ZUR VERWALTUNG EINES DRUCKERS
TERMINAL PORTABLE DE GESTION D'IMPRIMANTE

(30) Priority: 24.09.2015 JP 2015186952
(43) Date of publication of application: 29.03.2017
(73) Proprietor: Toshiba TEC Kabushiki Kaisha, 141-8562 Tokyo (JP)
(72) Inventor: WATANABE, Noriyuki, Shinagawa-ku, Tokyo 141-8562 (JP); LUNA, Dulce, 569138 Singapore (SG); HONGKAE, Looi, 569138 Singapore (SG); SHIRAISHI, Norihisa, Shinagawa-ku, Tokyo 141-8562 (JP)
(74) Representative: Fédit-Loriot

(56) References cited:
- EP-A1- 1 729 483
- US-A1- 2002 118 974
- US-A1- 2006 182 246
- US-A1- 2010 231 965
- US-A1- 2011 167 097
- US-A1- 2012 120 259

## Description

### FIELD

Embodiments described herein relate generally to a portable terminal to manage a printer, a method for controlling a portable terminal to manage the printer and a printer system comprising a portable terminal for managing the printer.

### BACKGROUND

Without being limited to an MFP (Multi-Functional Peripheral), there are various printers, such as a printer for POS (Point of Sales) for printing a receipt, a printer for a passbook for printing on a passbook, which meet needs of an end-user. A printer like this is connected to a network of an end-user side for collecting various information from the printer. The network of the end-user side collects and stores maintenance information indicating a state of the printer.

By way of example, US 2002/118974 A1 discloses a system for managing operation status of equipment and an apparatus used therein.

On the other hand, a server of a side of a vendor of a printer accumulates maintenance information of a printer. In the environment in which the server of the vendor side can be connected to a network of an end-user side, the server can directly collect maintenance information from the network of the end-use side. By this means, the vendor can always monitor the maintenance information of the printer.

However, there is a case that it is difficult to connect the server of the vendor side to the network of the end-user side, from the point of view of security. In such a case, the server of the vendor side cannot directly collect the maintenance information of the printer.

To solve such problems, there is provided a portable terminal for managing a printer according to claim 1 and comprising:
an input device that inputs maintenance information indicating a state of the printer from the printer;
a display; and
a controller that analyzes the inputted maintenance information, converts the inputted maintenance information into a format suitable for display of the display, based on this analysis result, and controls the display, so as to display the converted maintenance information as the management information of the printer on the display;
wherein the input device includes a communication device to receive the maintenance information to be transmitted from the printer by wireless communication,
characterized in that said portable terminal further comprises:
   a storage device to store reference data indicating a specification range of the printer for each of the plurality of data of the maintenance information, which is a value set for each of the plurality of data of the maintenance information as a range in which the printer can normally operate, and
   in that:
      the controller compares each of the plurality of data of the maintenance information with the reference data stored in the storage device; and
      the display displays whether or not each of the plurality of data of the maintenance information is within the specification range, as this comparison result.

Preferably, the input device includes a communication device to receive the maintenance information to be transmitted from the printer by wireless communication.

Preferably still, the input device includes an photographing device that photographs a sheet to be printed by the printer, to input the maintenance information.

Preferably yet, the communication device performs transmission/reception with an external server for storing the maintenance information;
the controller controls transmission of the maintenance information by the communication device, so as to store the maintenance information in the external server; and
the controller controls reception of the maintenance information by the communication device, so as to input the maintenance information which is previously stored in the external server.

Suitably, the maintenance information includes a plurality of state information indicating respective states of a plurality of constituent elements contained in the printer, and tally information of a plurality of constituent elements contained in the printer.

Suitably still, the input device inputs the maintenance information in the form of a series of data in which a plurality of data including data indicating the state information and data indicating the tally information are gathered.

Suitably yet, the portable terminal further comprises:
a storage device to store reference data indicating a specification range of the printer, for each of the plurality of data of the maintenance information.

Typically, the controller compares each of the plurality of data of the maintenance information with the reference data stored in the storage device; and
the display displays whether or not each of the plurality of data of the maintenance information is within the specification range, as this comparison result.

Typically still, the data indicating the state information of the maintenance information includes number of times data indicating a number of times of cutting a sheet by a cutter that is the constituent element of the printer.

Typically yet, the data indicating the state information of the maintenance information includes data indicating a resistance value of each of a plurality of heat generating elements of a thermal head that is the constituent element of the printer.

Conveniently, the communication device receives the maintenance information which is previously stored in the external server, as past maintenance information indicating a state of the printer prior to a state of the printer which the maintenance information indicates.

Conveniently still, the controller analyzes the received past maintenance information;
converts the received past maintenance information into a format suitable for display of the display, based on this analysis result; and
controls the display so as to display the converted past maintenance information on the display.

The invention also relates to a control method of a portable terminal to manage a printer according to claim 14 and comprising:
inputting maintenance information indicating a state of the printer from the printer;
analyzing the inputted maintenance information;
converting the inputted maintenance information into a format suitable for display of the display based on this analysis result; and
displaying the converted maintenance information on the display.

The invention further relates to a printer system comprising a portable terminal for managing the printer according to claim 15 and the system comprising:
an input means configured to input maintenance information indicating a state of the printer from the printer;
a display means configured to display management information of the printer; and
a controller means configured;
to analyze the inputted maintenance information,
to convert the inputted maintenance information into a format suitable for display of the display, based on this analysis result, and
to control the display, so as to display the converted maintenance information as the management information of the printer on the display.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram showing a portable terminal according to a first embodiment and devices to perform communication with this terminal.
Fig. 2 is a block diagram showing the portable terminal according to the first embodiment.
Fig. 3 is a block diagram showing the printer according to the first embodiment.
Fig. 4 is a block diagram showing the server according to the first embodiment.
Fig. 5 is a flow chart showing a processing which the printer according to the first embodiment performs.
Fig. 6 is a flow chart showing a processing which the portable terminal according to the first embodiment performs.
Fig. 7 is a flow chart showing a processing for primary maintenance in the portable terminal according to the first embodiment.
Fig. 8 is a flow chart showing a processing for different primary maintenance in the portable terminal according to the first embodiment.
Fig. 9 is a flow chart showing a processing which a printer according to a second embodiment performs.
Fig. 10 is a flow chart showing a processing which a portable terminal according to the second embodiment performs.

### DETAILED DESCRIPTION

According to one embodiment, a portable terminal manages a printer. The portable terminal has an input device, a display, and a controller. The input device inputs maintenance information indicating a state of the printer from the printer. The display displays management information of the printer. The controller analyzes the inputted maintenance information. The controller converts the inputted maintenance information into a format suitable for display of the display, based on this analysis result. Further, the controller controls the display, so as to display the converted maintenance information as the management information of the printer on the display.

Hereinafter, further embodiments will be described with reference to the drawings. In the drawings, the same symbols show the same or similar portions.

### (First embodiment)

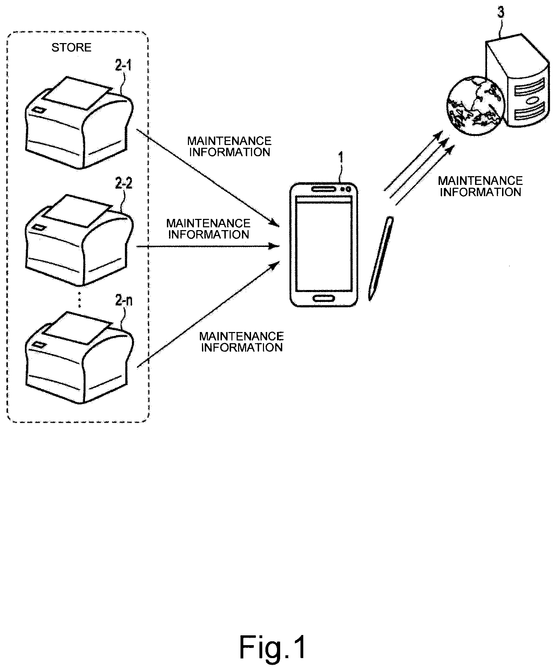

Fig. 1 is a schematic diagram of a portable terminal 1 according to a first embodiment and devices which perform communication with the portable terminal 1. In Fig. 1, the devices which perform communication with the portable terminal 1 are a printer 2-1 to a printer 2-n, and a server 3, for example. The portable terminal 1 is a terminal having a wireless communication function. The portable terminal 1, in order to collect maintenance information necessary for maintenance of n (n is not less than 1) printers installed in a store, that are the printer 2-1 to the printer 2-n, for example, directly performs wireless communication with each of the printer 2-1 to the printer 2-n. The portable terminal 1 performs wireless communication with the printer 2-1, to input maintenance information necessary for maintenance of the printer 2-1 from the printer 2-1. Similarly, the portable terminal 1 performs wireless communication with the printer 2-2 to the printer 2-n, to input maintenance information also from the printer 2-2 to the printer 2-n. The maintenance information will be described later.

The portable terminal 1 performs wireless communication with the printer 2-1 to the printer 2-n, in accordance with NFC (Near Field Communication) that is a standard of near field wireless communication, for example. In addition, the portable terminal 1 may perform wireless communication with the printer 2-1 to the printer 2-n, in accordance with a standard of wireless communication other than NFC. The portable terminal 1 may accord to a standard such as Bluetooth (registered trademark) or Wi-Fi (registered trademark).

The printer 2-1 to the printer 2-n are installed in a store. Hereinafter, taking the printer 2-1 as an example, the configuration and processing thereof will be described. Since the configuration and processing of the printer 2-2 to the printer 2-n are the same as those of the printer 2-1, the description thereof will be omitted.

The printer 2-1 is a printer for POS (Point of Sale) to be used at a checkout counter in a store, for example. In addition, the printer 2-1 may be a printer other than a printer for POS. The printer 2-1 may be a printer for a passbook to be used in a bank, or may be an MFP.

The server 3 accumulates maintenance information of each of the printer 2-1 to the printer 2-n. The maintenance information to be accumulated is transmitted from the portable terminal 1 to the server 3. Several examples of a method of transmitting maintenance information from the portable terminal 1 to the server 3 will be described. The portable terminal 1 transmits maintenance information to the server 3 via a based station, to upload the maintenance information to be accumulated in the server 3. The portable terminal 1 may transmit maintenance information to the server 3 via a base station by e-mail. The portable terminal 1 performs direct wireless communication with the server 3, and thereby may transmit maintenance information to the server 3. The portable terminal 1 is connected to the server 3 by cable, and thereby may transmit maintenance information to the server 3.

The server 3 stores the maintenance information in association with each of the printer 2-1 to the printer 2-n. The server 3 accumulates not only the maintenance information received from the portable terminal 1 most recently, but also the maintenance information received previously. Further, the server 3 also accumulates maintenance service information indicating history of maintenance by a serviceman, as the maintenance information. The maintenance service information is information indicating history in which a serviceman has exchanged a constituent element of the printer. The maintenance service information also includes information indicating history in which the serviceman has performed primary maintenance described below. The maintenance service information may be directly inputted into the server 3, or may be transmitted from the portable terminal 1 to the server 3.

Next, the maintenance information will be described. The maintenance information of the printer 2-1 is information indicating a state of the printer 2-1 which a serviceman requires for the maintenance of the printer 2-1. The maintenance information of each of the printer 2-2 to the printer 2-n is the same as the maintenance information of the printer 2-1. An example of information other than the above-described maintenance service information which is included in the maintenance information will be described, but the information included in the maintenance information is not limited to the example described below.

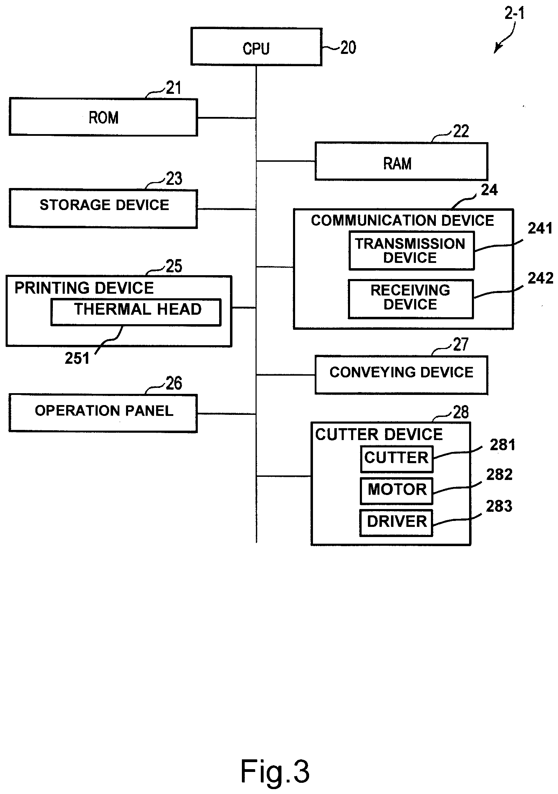

The maintenance information includes state information indicating a state of a constituent element of the printer 2-1. The state information of a constituent element of the printer 2-1 is an output of a sensor contained in the printer 2-1, for example. The sensor contained in the printer 2-1 is a sensor to detect presence or absence of a sheet, for example. The sensor contained in the printer 2-1 is a sensor to detect presence or absence of a jam of a sheet, for example. The sensor contained in the printer 2-1 is a sensor to detect a driving time of a motor 282 (refer to Fig. 3) fitted with a cutter 281 (refer to Fig. 3).

The state of the constituent element of the printer 2-1 is resistance values of a plurality of heat generating elements (hereinafter, may be referred to as dots) of a thermal head 251 (refer to Fig. 3) contained in the printer 2-1, for example.

The maintenance information further includes tally (tally) information in the printer 2-1. The tally information is a tallied value of histories of various operations of a constituent element of the printer 2-1. The tally information is the number of times when the cutter 281 contained in the printer 2-1 has cut a sheet, for example. The tally information is the number of lines which the thermal head 251 contained in the printer 2-1 has printed, for example.

The maintenance information further includes unique information of the printer 2-1 such as a model name and a serial number of the printer 2-1. The unique information is used when the server 3 accumulates maintenance information. The server 3 refers to the unique information included in the maintenance information, to accumulate the maintenance information in association with the printer 2-1. The maintenance information includes maintenance service information indicating history of the maintenance performed by the above-described serviceman.

For example, the maintenance information is a plurality of data including data indicating the above-described maintenance service information, data indicating the above-described state information, data indicating the above-described tally information, and data indicating the above-described unique information, and so on. When being transmitted from the printer 2-1 to the portable terminal 1, the maintenance information is converted into binary data in which the above-described plurality of data continue, for example, as described below. Accordingly, by just looking at the maintenance information to be transmitted to the portable terminal 1, the serviceman hardly understand the content of the maintenance information. For the reason, the maintenance information has high security. Further, the data amount of the maintenance information to be transmitted to the portable terminal 1 is smaller compared with data of a format which the serviceman can understand by looking.

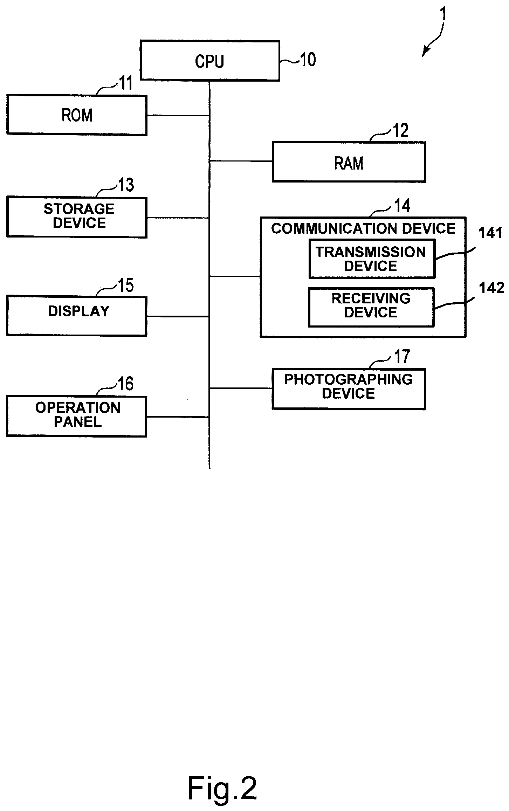

Next, a configuration of the portable terminal 1 will be described. Fig. 2 is a block diagram showing the portable terminal 1. The portable terminal 1 has a controller 10, a ROM (Read Only Memory) 11, a RAM (Random Access Memory) 12, a storage device 13, a display 15, and an operation panel 16. Further, the portable terminal 1 has a communication device 14 and a photographing device 17, as an input device to input maintenance information. In addition, the portable terminal 1 may be a special-purpose machine, or may be a general-purpose machine in which a special application is installed. The general-purpose machine is a smartphone, a tablet or a note PC (Personal Computer), or the like.

The controller 10 is a CPU (Central Processing Unit), for example. The CPU 10 controls an operation of each constituent element of the portable terminal 1. The CPU 10 executes a processing according to the first embodiment by a program. The CPU 10 is also processing means for processing the maintenance information. The ROM 11 stores fixed data such as a control program. The RAM 12 has an area for storing changeable setting data, and a work area for temporarily storing various data. The storage device 13 stores an application and rewritable data. The storage device 13 stores an application which can analyze the maintenance information.

The communication device 14 performs direct wireless communication with a device other than the portable terminal 1. The communication device 14 can also perform wireless communication via a base station, such as LTE (Long Term Evolution). The communication device 14 has a transmission device (transmission means) 141 capable of transmitting data. The communication device 14 has a receiving device (receiving means) 142 capable of receiving data.

The display 15 is display means for displaying an image. The display 15 displays management information of the printer 2-1. The management information of the printer 2-1 includes various information, such as the maintenance information. The operation panel 16 is a key to accept various inputs by a serviceman. The operation panel 16 may be a button type key, or may be a touch panel type key. The photographing device 17 is a camera for taking in an image. The photographing device 17 is also reading means for reading a bar-code. In addition, in the first embodiment, the portable terminal 1 need not have the photographing device 17 as the input device.

Next, a configuration of the printer 2-1 will be described. Fig. 3 is a block diagram showing the printer 2-1. The printer 2-1 has a CPU 20, a ROM 21, a RAM 22, a storage device 23, a communication device 24, a printing device 25, an operation panel 26, a conveying device 27 and a cutter device 28.

The CPU 20 controls an operation of each constituent element of the printer 2-1. The CPU 20 is also processing means for processing the maintenance information. The ROM 21 stores fixed data such as a control program. The RAM 22 has an area for storing changeable setting data, and a work area for temporarily storing various data. The storage device 23 stores an application and rewritable data.

The communication device 24 performs direct wireless communication with a device other than the printer 2-1. The communication device 24 has a transmission device 241 capable of transmitting data. The communication device 24 has a receiving device 242 capable of receiving data.

The printing device 25 prints an image on a sheet. The printing device 25 has the thermal head 251. The thermal head 251 has a plurality of heat generating elements (dots) which are aligned in a line shape. The thermal head 251 performs printing on a sheet line by line. When the printer 2-1 is a printer for POS, the thermal head 251 performs printing on a belt-like sheet wound in a roll shape line by line. When the printer 2-1 is a printer for a passbook, the thermal head 251 performs printing on a passbook line by line. In addition, when the printer 2-1 is an MFP, the printing device 25 may have a constituent element different from the thermal head 251 which is necessary for printing.

The operation panel 26 is a key to accept various inputs by a user or a serviceman. The operation panel 26 may be a button type key or a touch panel type key. The conveying device 27 discharges a sheet printed by the printing device 25 outside the chassis. The conveying device 27 has a conveying roller, a conveying motor and a motor driver, and so on.

The cutter device 28 has the cutter 281, the motor 282 and a driver 283, for example. The cutter 281 is fitted on the motor 282. The driver 283 control driving of the motor 282. The cutter 281 rotates in accordance with the rotation of the motor 282. The cutter 281 performs one rotation around a certain point, for example, to cut off a sheet. The cutter 281 cuts off a printed sheet discharged outside the chassis from a belt-like sheet wound in a roll shape. In addition, when the printer 2-1 is a printer for a passbook or an MFP, the printer 2-1 need not have the cutter device 28.

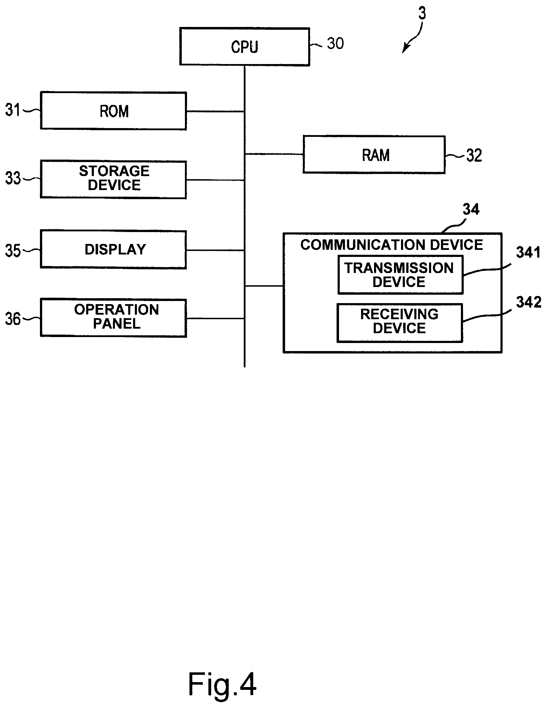

Next, a configuration of the server 3 will be described. Fig. 4 is a block diagram showing the server 3. The server 3 has a CPU 30, a ROM 31, a RAM 32, a storage device 33, a communication device 34, a display 35 and an operation panel 36.

The CPU 30 controls an operation of each constituent element of the server 3. The ROM 31 stores fixed data such as a control program. The RAM 32 has an area for storing changeable setting data, and a work area for temporarily storing various data. The storage device 33 stores an application and rewritable data. The storage device 33 accumulates the maintenance information.

The communication device 34 performs direct wireless communication with a device other than the server 3. The communication device 34 can also perform wireless communication via a base station, such as LTE. The communication device 34 has a transmission device 341 capable of transmitting data. The communication device 34 has a receiving device 342 capable of receiving data. The display 35 is display means for displaying an image. The operation panel 36 is a key to accept various inputs by a serviceman and so on. The operation panel 36 may be a button type key, or a touch panel type key.

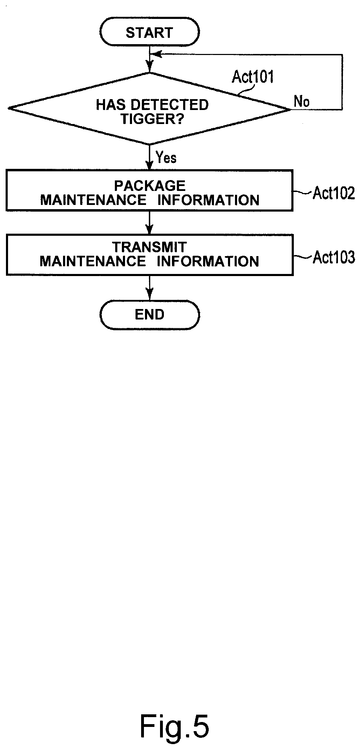

Next, a processing in the printer 2-1 will be described. Fig. 5 is a flow chart showing a transmission processing of the maintenance information in the printer 2-1. As shown in Fig. 5, in Act101, the CPU 20 judges whether or not to have detected a trigger for starting a transmission processing of the maintenance information. Examples of several triggers will be described, but the trigger is not limited to the examples described below.

The trigger is an acceptance of a specific operation of a serviceman, for example, by the operation panel 26. The serviceman performs the specific operation to request start of a transmission processing of the maintenance information, in the operation panel 26. The CPU 20 judges to have detected the trigger, based on the acceptance of the above-described specific operation of the serviceman by the operation panel 26. In this example, the serviceman performs the above-described specific operation, in each of the printer 2-1 to the printer 2-n.

The trigger may be reception of a command which the portable terminal 1 transmits to the printer 2-1. The portable terminal 1 transmits the command to request start of a transmission processing of the maintenance information to the printer 2-1. The CPU 20 judges to have received the trigger based on the reception of the command from the portable terminal 1 by the communication device 24. In this example, the serviceman goes around, with the portable terminal 1, the vicinity (wireless communication available area) of each of the printer 2-1 to the printer 2-n. The serviceman transmits the above-described command to each of the printer 2-1 to the printer 2-n, using the portable terminal 1.

The trigger may be reception of a list which the portable terminal 1 transmits to the printer 2-1. The list includes unique information of not less than one printer which becomes an object from which the maintenance information is to be collected. Further, the list includes a command to request start of a transmission processing of the maintenance information to the printer included in this. The portable terminal 1 transmits the list to the printer 2-1.

The CPU 20 judges whether or not the unique information of the printer 2-1 is included in the list. When the unique information of the printer 2-1 is included in the list, the CPU 20 judges to have detected the trigger. In this example, the serviceman goes around, with the portable terminal 1, the vicinity (wireless communication available area) of each of the printer 2-1 to the printer 2-n. The serviceman transmits the list to each of the printer 2-1 to the printer 2-n, using the portable terminal 1.

When the CPU 20 has not detected the trigger in the above-described Act101 (No in Act101), the CPU 20 stands by until it detects the trigger. When the CPU 20 has detected the trigger (Yes in Act101), the processing of the CPU 20 proceeds to Act102. In Act102, the CPU 20 packages the above-described plurality of data that is the maintenance information. That is, the CPU 20 gathers the plurality of data that is the maintenance information into a series of data. In an example, the CPU 20 converts the plurality of data that is the maintenance information, and generates the converted plurality of data in the form of continuing binary data.

In Act103, the CPU 20 controls the communication device 24 so as to transmit the maintenance information to the portable terminal 1. In Act103, the communication device 24 transmits the maintenance information to the portable terminal 1 existing within the wireless communication available area of the printer 2-1. The maintenance information to be transmitted from the printer 2-1 to the portable terminal 1 is the above-described continuing binary data generated in Act102. In addition, the printer 2-1 can transmit the maintenance information to the portable terminal 1, even in the state that the printing device 25 is out of order.

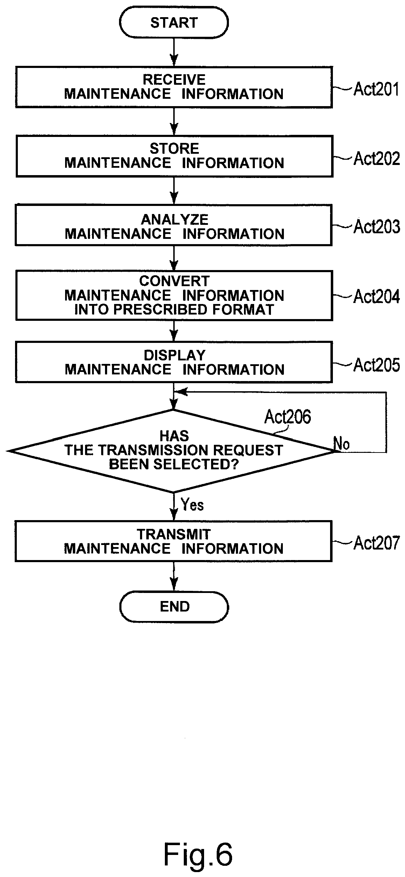

Next, a processing in the portable terminal 1 will be described. The serviceman goes around, with the portable terminal 1, within the wireless communication available area of each of the printer 2-1 to the printer 2-n. Fig. 6 is a flow chart showing a processing of the maintenance information relating to the printer 2-1 in the portable terminal 1.

As shown in Fig. 6, in Act201, the CPU 10 controls the communication device 14, so as to receive the maintenance information from the printer 2-1 (Act201). In Act201, the receiving device 142 of the communication device 14 performs wireless communication with the printer 2-1, to receive the maintenance information from the printer 2-1. In addition, here, the maintenance information received from the printer 2-1 by the portable terminal 1 is the above-described continuing binary data generated in Act102.

Next, in Act202, the CPU 10 controls the storage device 13, so as to store the above-described received maintenance information in the storage device 13. In Act202, the storage device 13 stores the maintenance information that is the above-described continuing binary data.

In Act203, the CPU 10 analyzes the above-described continuing binary data that is the above-described received maintenance information, using an application capable of analyzing the maintenance information. Next, in Act204, the CPU 10 converts the above-described continuing binary data that is the above-describe analyzed maintenance information into data of a prescribed format. As an example, the CPU 10 converts the continuing binary data into data of a format suitable for display of the display 15, using the above-described application. The continuing binary data that is the maintenance information is converted into the format suitable for display of the display 15, and thereby becomes data of a format which the serviceman can understand, for example.

In Act205, the CPU 10 controls the display 15, so as to display the maintenance information on the display 15. In Act205, the display 15 displays the maintenance information that is the data converted in Act204 as the management information of the printer 2-1. By this means, the serviceman can confirm the content of the maintenance information.

In Act206, the CPU 10 judges whether or not a transmission request of the maintenance information has been selected by the serviceman. The serviceman selects the transmission request of the maintenance information relating to the printer 2-1 in the operation panel 16. The operation panel 16 accepts the selection of the above-described transmission request by the serviceman. In the above-described Act206, when the transmission request of the maintenance information has not been selected (No in Act206), the CPU 10 stands by until the transmission request of the maintenance information is selected.

When the transmission request of the maintenance information has been selected (Yes in Act206), the processing of the CPU 10 proceeds to Act207. In Act207, the CPU 10 controls the communication device 14, so as to transmit the maintenance information to the server 3 (Act207). In Act207, the transmission device 141 of the communication device 14 transmits the maintenance information to the server 3. The server 3 accumulates the maintenance information in the storage device 33 in association with the printer 2-1. In addition, here, the maintenance information to be transmitted to the server 3 is the above-described continuing binary data.

According to the first embodiment, the portable terminal 1 performs wireless communication, and thereby can easily collect the maintenance information from each printer. For the reason, the serviceman only goes around, with the portable terminal 1, the vicinity of each printer, and thereby can collect the maintenance information. Accordingly, the serviceman can save labor for creating a report of the state of each printer. Further, the portable terminal 1 can display the maintenance information, using the application capable of analyzing the maintenance information. For the reason, the serviceman can immediately confirm the content of the maintenance information on the spot.

In addition, the transmission of the maintenance information from the portable terminal 1 to the server 3 may be performed as described below. That is, in Act206 of Fig. 6, the portable terminal 1 may accept selection of the transmission request of the maintenance information of a plurality of the printers collectively. The portable terminal 1 can transmit the maintenance information of the plurality of printers to the server 3 at once. By this means, the serviceman can save labor for selecting the transmission request, each time of collecting the maintenance information of one printer by the portable terminal 1.

Further, the portable terminal 1 need not perform the processing of Act206 of Fig. 6. In this case, the CPU 10 controls the communication device 14, so as to transmit the maintenance information to the server 3, even if the transmission request of the maintenance information is not selected by the serviceman. For example, the CPU 10 controls the communication device 14, so as to transmit the maintenance information to the server 3, at an arbitrary timing after having received the maintenance information from the printer 2-1 in Act201. By this means, the serviceman can save labor for selecting the transmission request of the maintenance information in the portable terminal 1.

Next, a processing of the maintenance information for primary maintenance that forms a modification of the first embodiment will be described. The primary maintenance is that a serviceman who has acquired maintenance information using the portable terminal 1 performs maintenance of the printer 2-1 on the spot. The serviceman confirms the maintenance information displayed on the portable terminal 1, and thereby can perform the primary maintenance.

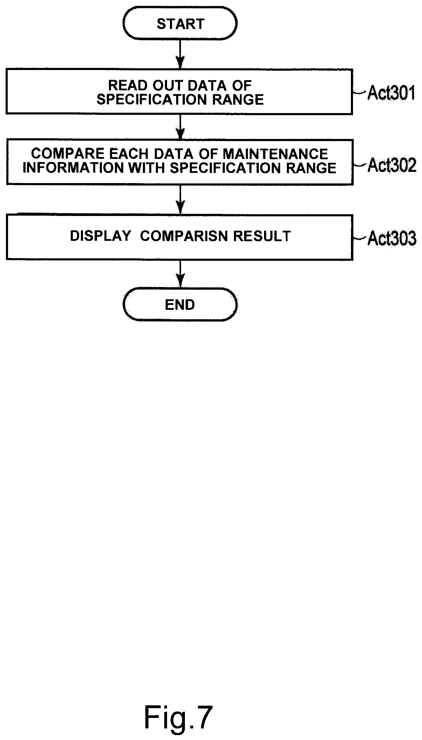

An example of a processing of the maintenance information for the primary maintenance will be described. Fig. 7 is a flow chart showing a processing of the maintenance information for the primary maintenance in the portable terminal 1. As shown in Fig. 7, in Act301, the CPU 10 reads out reference data indicating a specification range from the storage device 13. The reference data of the specification range is set in the application capable of analyzing the above-described maintenance information. In addition, as described above, the application capable of analyzing the above-described maintenance information is stored in the storage device 13. The reference data of the specification range is a value set as a range in which the printer 2-1 can normally operate. The reference data indicating the specification range may be a range which is specified by an upper limit value and a lower limit value, or may be only an upper limit value. The reference data of the specification range is set in the above-described application, for each of the above-described plurality of data that is the maintenance information.

An example of the reference data indicating the specification range will be described below. It is assumed that the state information included in the maintenance information is a resistance value of each dot contained in the thermal head 251. The reference data indicating the specification range is data indicating a range specified by an upper limit value and a lower limit value of the resistance value in a range in which print performance of each dot contained in the thermal head 251 does not deteriorate. As the print performance of each dot contained in the thermal head 251 deteriorates, the resistance value of each dot becomes outside the specification range.

It is assumed that the state information included in the maintenance information is a time which the cutter 281 requires for cutting off a sheet. In addition, the time which the cutter 281 requires for cutting off a sheet corresponds to a driving time of the motor 282. The reference data of the specification range is an upper limit value of a normal time required for cutting off a sheet by the cutter 281. As the cutter 281 or the motor 282 deteriorates, the time which the cutter 281 requires for cutting off a sheet becomes longer.

It is assumed that the tally information included in the maintenance information is the number of lines (tally information) printed by the thermal head 251. The reference data of the specification range is an upper limit value of the number of lines determined by assuming a life of the thermal head 251. As the number of lines printed by the thermal head 251 increases, the thermal head 251 deteriorates.

It is assumed that the tally information included in the maintenance information is the number of times of cutting off a sheet by the cutter 281. The reference data of the specification range is an upper limit value of the number of times which has been determined by assuming a life of the cutter 281 or the motor 282. As the number of times of cutting a sheet by the cutter 281 increases, the cutter 281 or the motor 282 deteriorates.

As shown in Fig. 7, in Act302, the CPU 10 compares the maintenance information with the specification range of the printer 2-1. That is, the CPU 10 compares each of the above-described plurality of data included in the maintenance information with the reference data indicating the specification range of the printer 2-1. In Act303, the CPU 10 controls the display 15, so as to display the above-described comparison result on the display 15. In Act303, the display 15 displays the comparison result by the CPU 10. That is, the display 15 displays whether or not the maintenance information is within the specification range. The display 15 may display the maintenance information outside the specification range by a color different from that of the maintenance information within the specification range.

In addition, when transmitting the maintenance information to the server 3, the CPU 10 may control the communication device 14, so as to transmit the maintenance information to the server 3 by adding the above-described comparison result to the maintenance information. Further, the CPU 10 may control the communication device 14, so as to transmit the content of the primary maintenance which the serviceman has performed to the server 3. At this time, the serviceman inputs the content and date and time of the primary maintenance in the operation panel 16. By this means, the server 3 can accumulate the fulfilling maintenance information.

According to the example of the above-described modification, the serviceman can easily grasp what constituent element is defective in the printer 2-1. For example, if the resistance value of the dot contained in the thermal head 251 is outside the specification range, the serviceman can judge that the dot is an exchange object. If the number of lines which the thermal head 251 has printed is outside the specification range, the serviceman can judge that the thermal head 251 is an exchange object. If the time which the cutter 281 requires for cutting off a sheet is outside the specification range, the serviceman can judge that at least one of the cutter 281 and the motor 282 is an exchange object. If the number of times of cutting a sheet by the cutter 281 is outside the specification range, the serviceman can judge that at least one of the cutter 281 and the motor 282 is an exchange object. Accordingly, the serviceman can deal with the defect of the printer 2-1 on the spot, as the primary maintenance.

Further, the serviceman can also judge the defect of the constituent element by adding the tally information to the state of the constituent element of the printer 2-1. Hereinafter, an example thereof will be described.

For example, there is a case in which even if the number of lines (the tally information) printed by the thermal head 251 is within the specification range, the resistance values (the state information) of some dots composing the thermal head 251 are outside the specification range. The serviceman can predict a use period of the thermal head 251, based on the number of lines printed by the thermal head 251. There is a case in which consistency between this use period and the number of dots of the thermal head 251 outside the specification range is not ensured. For example, there is a case in which the use period of the thermal head 251 is short, but in contrast, the number of dots of the thermal head 251 outside the specification range is large. In this case, the serviceman can examine the cause of defect except the deterioration by a normal use, as the primary maintenance.

Similarly, there is a case in which even the number of times (the tally information) of cutting off a sheet by the cutter 281 is within the specification range, the time (the state information) which the cutter 281 requires for cutting off a sheet is outside the specification range. The serviceman can predict use periods of the cutter 281 and the motor 282, based on the number of times of cutting off a sheet by the cutter 281. There is a case in which consistency between this use period and the time which the cutter 281 requires for cutting off a sheet is not ensured. For example, there is a case in which the use periods of the cutter 281 and the motor 282 are short, but in contrast, the time which the cutter 281 requires for cutting off a sheet is long. In this case, the serviceman can examine the cause of defect except the deterioration by a normal use, as the primary maintenance.

A processing of maintenance information for the primary maintenance according to another example will be described. The example shown here relates to acquisition of past maintenance information in the portable terminal 1. The past maintenance information is maintenance information indicating a state of the printer 2-1 prior to a state of the printer 2-1 indicated by maintenance information which the portable terminal 1 has received most recently. The past maintenance information includes history of maintenance by the serviceman.

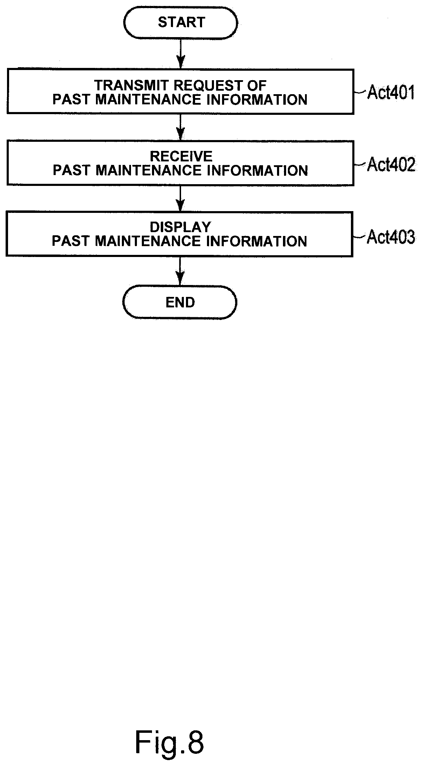

Fig. 8 is a flow chart showing an acquisition processing of the above-described past maintenance information in the portable terminal 1. As shown in Fig. 8, in Act401, the CPU 10 controls the communication device 14, so as to transmit a request of the past maintenance information to the server 3. In Act401, the transmission device 141 of the communication device 14 transmits the request of the past maintenance information to the server 3. For example, the CPU 10 controls the communication device 14, based on an operation by the serviceman, so as to transmit the request of the past maintenance information. The serviceman inputs, in the operation panel 16, the unique information of the printer 2-1 that becomes an acquisition object of the past maintenance information, and inputs the request of the past maintenance information. In this manner, the request of the past maintenance information includes the unique information of the printer 2-1 which becomes an acquisition object. The reason is because the server 3 extracts the past maintenance information from the storage device 33, with reference to the unique information of the printer 2-1.

In Act402, the CPU 10 controls the communication device 14, so as to receive the past maintenance information from the server 3. In Act402, the receiving device 142 of the communication device 14 receives the past maintenance information from the server 3. The CPU 10 stores the past maintenance information in the storage device 13.

In Act403, the CPU 10 controls the display 15, so as to display the past maintenance information on the display 15. Specifically, in the same manner as the processings of Act203 to Act205 of Fig. 6, the CPU 10 converts the above-described continuing binary data that is the past maintenance information into data of a format suitable for display of the display 15, using the application capable of analyzing the above-described maintenance information. The display 15 displays the past maintenance information that is the above-described converted data. In addition, a displaying method of the past maintenance information is not particularly limited. For example, the display 15 may display only the past maintenance information, without displaying the maintenance information which the portable terminal 1 has received from the printer 2-1 most recently. The display 15 may display both the maintenance information which the portable terminal 1 has received from the printer 2-1 most recently, and the past maintenance information.

The serviceman looks at the past maintenance information, and thereby can easily grasp what failure occurred in past times. In addition, the serviceman can easily grasp the time when the constituent element of the printer 2-1 was exchanged. When the exchange period of the constituent element of the printer 2-1 is short, the serviceman can examine the cause of defect except the deterioration by a normal use as the primary maintenance.

In addition, the CPU 10 compares the maintenance information of this time with the maintenance information of the last time. The CPU 10 may control the display 15, so as to display the difference between the maintenance information of this time and the maintenance information of the last time on the display 15, based on the comparison result. The maintenance information of this time is the maintenance information which the portable terminal 1 has received most recently. The maintenance information of the last time is the maintenance information which the portable terminal 1 received one time before the maintenance information of this time, out of the past maintenance information.

An example of comparison between the maintenance information of this time and the maintenance information of the last time will be described. The CPU 10 calculates a period from a date and time when the portable terminal 1 received the maintenance information of the last time, to a date and time when the portable terminal 1 received the maintenance information of this time. Further, the CPU 10 calculates a difference between the data included in the maintenance information of the last time and the data included in the maintenance information of this time.

For example, the CPU 10 calculates a difference between resistance values of each dot of the thermal head 251 included in the maintenance information of the last time and the maintenance information of this time for each dot. The difference between the resistance values corresponds to deterioration of each dot. The CPU 10 controls the display 15, so as to display the above-described period and the above-described difference of each dot on the display 15. In addition, the CPU 10 may judge whether or not the relation between the above-described period and the above-described difference is proper for each dot, based on a predetermined rule. The display 15 displays whether or not the relation between the above-described period and the above-described difference is proper for each dot. For example, the display 15 displays a dot in which the relation between the above-described period and the above-described difference is not proper, by a color different from that of a dot in which the relation between the above-described period and the above-described difference is proper.

For example, a case is assumed in which there is a dot in which the difference between the resistance values is large, for the above-described period. The serviceman can easily discriminate the dot like this as a dot with a large deterioration degree. Therefore, the serviceman can perform the primary maintenance to the dot like this.

For example, the CPU 10 can also calculate the difference of the times required for cutting a sheet by the cutter 281 included in the maintenance information of the last time and the maintenance information of this time. The above-described difference corresponds to deterioration of at least one of the cutter 281 and the motor 282. The CPU 10 controls the display 15, so as to display the above-described period and the above-described difference on the display 15. In addition, the CPU 10 may judge whether or not the relation between the above-described period and the above-described difference is proper, based on a predetermined rule. The display 15 displays whether or not the relation between the above-described period and the above-described difference is proper. For example, the display 15 displays a case in which the relation between the above-described period and the above-described difference is proper and a case in which it is not proper by different colors.

For example, a case is assumed in which a difference between the times required for cutting a sheet by the cutter 281 is large, for the above-described period. The serviceman can easily discriminate that at least one of the cutter 281 and the motor 282 has deteriorated. Therefore, the serviceman can perform the primary maintenance to at least one of the cutter 281 and the motor 282.

In addition, the portable terminal 1 can acquire maintenance information from the printer 2-1 immediately after being manufactured. The maintenance information which the portable terminal 1 acquires at this stage is initial data indicating a state of the printer 2-1 without initial failure. The server 3 also accumulates the maintenance information that becomes the initial data.

The portable terminal 1 can acquire the maintenance information that becomes the initial data from the server 3 as the past maintenance information. The serviceman can easily judge whether the defect of the printer 2-1 which is installed in a store and is during operation occurred after it was installed in the store or had occurred before it was installed in the store.

### (Second embodiment)

In the following description of a second embodiment, portions different from the first embodiment will be described. In the second embodiment, the same symbols as the first embodiment are given to the similar portions to the first embodiment, and the description thereof will be omitted.

The second embodiment is mainly different from the first embodiment in the following points. The printer 2-1 does not transmit the maintenance information to the portable terminal 1. In place of this, the printer 2-1 prints a bar-code indicating the maintenance information on a sheet. The portable terminal 1 does not receive the maintenance information from the printer 2-1. In place of this, the portable terminal 1 reads the above-described bar-code, to acquire the maintenance information.

The configurations of the portable terminal 1, the printer 2-1 to the printer 2-n and the server 3 according to the second embodiment are the same as the first embodiment. In addition, the printer 2-1 need not have the communication device 24.

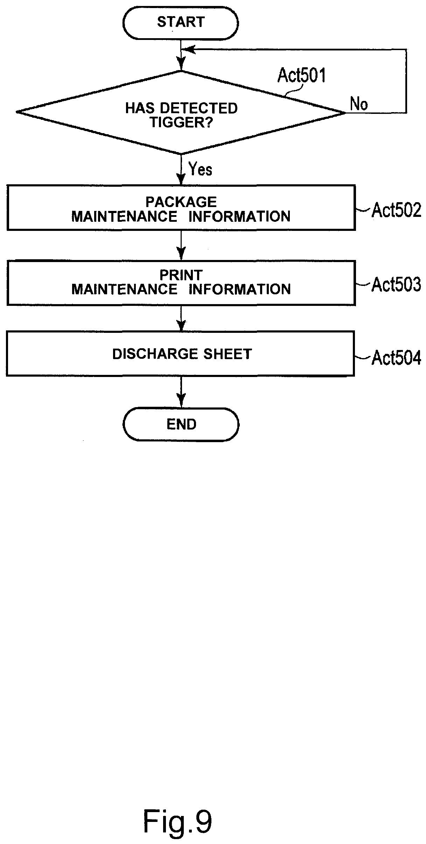

Next, a processing in the printer 2-1 will be described. Fig. 9 is a flow chart showing a processing of the maintenance information in the printer 2-1.

As shown in Fig. 9, in Act501, the CPU 20 judges whether or not to have detected a trigger for starting a print processing of the maintenance information. The trigger is an acceptance of a specific operation of a serviceman by the operation panel 26. The serviceman performs the specific operation to request start of a print processing of the maintenance information, in the operation panel 26. The CPU 20 judges to have detected the trigger, based on the acceptance of the above-described specific operation of the serviceman by the operation panel 26. In this example, the serviceman performs the above-described specific operation in each of the printer 2-1 to the printer 2-n.

When the CPU 20 has not detected the trigger in the above-described Act501 (No in Act501), the CPU 20 stands by until it detects the trigger. When the CPU 20 has detected the trigger (Yes in Act501), the processing of the CPU 20 proceeds to Act502. In Act502, the CPU 20 packages the above-described plurality of data that is the maintenance information. That is, the CPU 20 gathers the plurality of data that is the maintenance information into a series of data. In an example, the CPU 20 generates the plurality of data that is the maintenance information in the form of continuing binary data.

In Act503, the CPU 20 controls the printing device 25, so as to print a bar-code indicating the maintenance information (the above-described continuing binary data) on a sheet. In Act503, the printing device 25 prints the bar-code indicating the maintenance information on a sheet. The bar-code which the printing device 25 prints on the sheet is a two-dimensional bar-code, for example, but may be a bar-code other than this.

In Act504, the CPU 20 controls the conveying device 27, so as to discharge the sheet printed with the above-described bar-code. In Act504, the conveying device 27 discharges the sheet printed with the bar-code to the outside of the chassis.

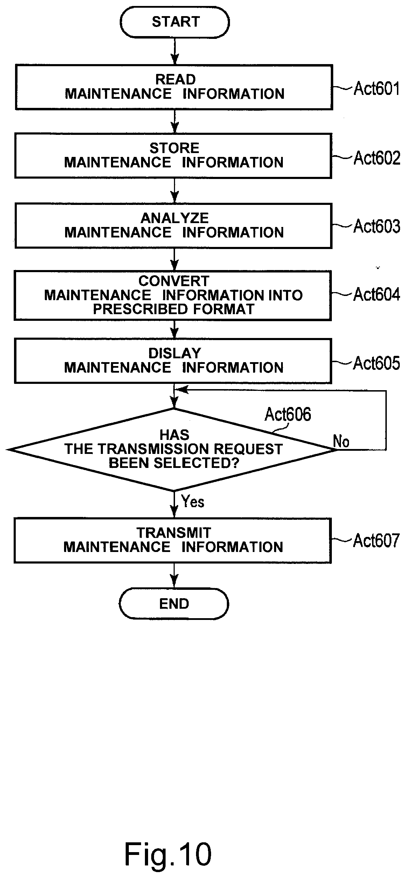

Next, a processing of the maintenance information in the portable terminal 1 will be described. The serviceman goes around to read the bar-codes which the printer 2-1 to the printer 2-n have printed on the respective sheets, using the photographing device 17 of the portable terminal 1. Fig. 10 is a flow chart showing a processing of the maintenance information relating to the printer 2-1 in the portable terminal 1.

As shown in Fig. 10, in Act601, the CPU 10 controls the photographing device 17, so as to read the above-described bar-code. In Act601, the photographing device 17 reads the bar-codes printed by the printing devices 25 of the printers 2-1 to 2-n. As described above, the bar-code indicates the maintenance information (the above-described continuing binary data). The CPU 10 extracts the maintenance information from the bar-code read using the photographing device 17.

The CPU 10 performs processings of Act602 to Act607, after the processing of the above-described Act601. The processings of Act602 to Act607 are the same as the processings of Act202 to Act207, the description of these processings will be omitted.

According to the second embodiment, the portable terminal 1 reads the bar-code, and thereby can easily collect the maintenance information from each printer. For the reason, the serviceman reads only the bar-code which each printer prints using the portable terminal 1, and thereby can collect the maintenance information. Accordingly, the serviceman can save labor for creating a report of a state of each printer. Further, the portable terminal 1 can display the maintenance information, using the application capable of analyzing the maintenance information. For the reason, the serviceman can immediately confirm the content of the maintenance information on the spot.

In addition, the processing for the primary maintenance in the portable terminal 1 described in the first embodiment can also be applied to the second embodiment. The transmission processing of the maintenance information from the portable terminal 1 to the server 3 described in the first embodiment can also be applied to the second embodiment. The effect obtained in connection with these is the same as the effect described in the first embodiment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims are intended to cover such forms or modifications as would fall within the scope and framework of the inventions.

## Claims

1. A portable terminal for managing a printer, comprising:
an input device that inputs maintenance information indicating a state of the printer from the printer;
a display; and
a controller that analyzes the inputted maintenance information, converts the inputted maintenance information into a format suitable for display of the display, based on this analysis result, and controls the display, so as to display the converted maintenance information as the management information of the printer on the display;
wherein the input device includes a communication device to receive the maintenance information to be transmitted from the printer by wireless communication,
**characterized in that** said portable terminal further comprises:
a storage device to store reference data indicating a specification range of the printer for each of the plurality of data of the maintenance information, which is a value set for each of the plurality of data of the maintenance information as a range in which the printer can normally operate, and
**in that**:
the controller compares each of the plurality of data of the maintenance information with the reference data stored in the storage device; and
the display displays whether or not each of the plurality of data of the maintenance information is within the specification range, as this comparison result.

2. The portable terminal according to claim 1, wherein
the input device includes a photographing device that photographs a sheet to be printed by the printer, to input the maintenance information.

3. The portable terminal according to claims 1 to 2, wherein
the communication device performs transmission/reception with an external server for storing the maintenance information;
the controller controls transmission of the maintenance information by the communication device, so as to store the maintenance information in the external server; and
the controller controls reception of the maintenance information by the communication device, so as to input the maintenance information which is previously stored in the external server.

4. The portable terminal according to any one of claims 1 to 3, wherein
the maintenance information includes a plurality of state information indicating respective states of a plurality of constituent elements contained in the printer, and tally information of a plurality of constituent elements contained in the printer.

5. The portable terminal according to claim 4, wherein
the input device inputs the maintenance information in the form of a series of data in which a plurality of data including data indicating the state information and data indicating the tally information are gathered.

6. The portable terminal according to claims 5, wherein
the data indicating the state information of the maintenance information includes number of times data indicating a number of times of cutting a sheet by a cutter that is the constituent element of the printer.

7. The portable terminal according to any one of claims 5 to 6, wherein
the data indicating the state information of the maintenance information includes data indicating a resistance value of each of a plurality of heat generating elements of a thermal head that is the constituent element of the printer.

8. The portable terminal according to any one of claims 3 to 7, wherein
the communication device receives the maintenance information which is previously stored in the external server, as past maintenance information indicating a state of the printer prior to a state of the printer which the maintenance information indicates.

9. The portable terminal according to claim 8, wherein
the controller analyzes the received past maintenance information;
converts the received past maintenance information into a format suitable for display of the display, based on this analysis result; and
controls the display so as to display the converted past maintenance information on the display.

10. The portable terminal according to claim 6, wherein the specification range is an upper limit value of a normal time required for cutting off a sheet by the cutter.

11. The portable terminal according to claim 7, wherein the specification range is a range specified by an upper limit value and a lower limit value of the resistance value in a range in which print performance of each dot contained in the thermal head does not deteriorate.

12. The portable terminal according to claim 6, wherein the tally information is a number of times of cutting off a sheet by the cutter and the specification range is an upper limit value of the number of times determined by assuming a life of the cutter or a motor of the printer.

13. The portable terminal according to claim 7, wherein the tally information is a number of lines printed by the thermal head and the specification range is an upper limit value of the number of lines determined by assuming a life of the thermal head.

14. A control method to manage a printer with a portable terminal, said method comprising:
inputting in said portable terminal maintenance information indicating a state of the printer from the printer;
analyzing with said potable terminal the inputted maintenance information;
converting through said potable terminal the inputted maintenance information into a format suitable for display of the display based on this analysis result; and
displaying the converted maintenance information on the display of said portable terminal;
**characterized in that** said method further comprises:
storing in said portable terminal reference data indicating a specification range of the printer for each of the plurality of data of the maintenance information, which is a value set for each of the plurality of data of the maintenance information as a range in which the printer can normally operate;
comparing each of the plurality of data of the maintenance information with the reference data stored in the storage device; and
displaying whether or not each of the plurality of data of the maintenance information is within the specification range, as this comparison result.

15. A printer system comprising
a printer; and
a portable terminal for managing said printer and comprising:
an input means configured to input maintenance information indicating a state of the printer from the printer said input device includes a communication device to receive the maintenance information to be transmitted from the printer by wireless communication;
a display means configured to display management information of the printer; and
a controller means configured;
to analyze the inputted maintenance information,
to convert the inputted maintenance information into a format suitable for display of the display, based on this analysis result, and
to control the display, so as to display the converted maintenance information as the management information of the printer on the display;
**characterized in that** said portable terminal further comprises:
a storage device to store reference data indicating a specification range of the printer for each of the plurality of data of the maintenance information, which is a value set for each of the plurality of data of the maintenance information as a range in which the printer can normally operate;
and **in that**:
the controller compares each of the plurality of data of the maintenance information with the reference data stored in the storage device; and
the display displays whether or not each of the plurality of data of the maintenance information is within the specification range, as this comparison result.

## Patentansprüche

1. Tragbare Endvorrichtung zur Verwaltung eines Druckers, umfassend:
eine Eingabevorrichtung, welche Wartungsinformationen, die einen Zustand des Druckers angeben, von dem Drucker eingibt;
eine Anzeigevorrichtung; und
eine Steuerung oder Regelung, welche die eingegebenen Wartungsinformationen analysiert, die eingegebenen Wartungsinformationen, ausgehend von diesem Analyseergebnis, in ein zur Anzeige auf der Anzeigevorrichtung geeignetes Format umwandelt und die Anzeigevorrichtung so steuert oder regelt, dass sie die umgewandelten Wartungsinformationen als die Verwaltungsinformationen des Druckers auf der Anzeigevorrichtung anzeigt;
wobei die Eingabevorrichtung eine Kommunikationsvorrichtung zum Empfangen der Wartungsinformationen enthält, welche von dem Drucker durch drahtloste Kommunikation zu übertragen sind,
**dadurch gekennzeichnet, dass** die tragbare Endvorrichtung ferner umfasst:
eine Speichervorrichtung zum Speichern von Referenzdaten, welche für jedes der Vielzahl von Daten der Wartungsinformationen einen Spezifikationsbereich des Druckers angeben, welcher ein Wert ist, der für jedes der Vielzahl von Daten der Wartungsinformationen als ein Bereich festgelegt ist, in dem der Drucker normalerweise arbeiten kann, und
dass:
die Steuerung oder Regelung jedes der Vielzahl von Daten der Wartungsinformationen mit den in der Speichervorrichtung gespeicherten Referenzdaten vergleicht; und
die Anzeigevorrichtung als dieses Vergleichsergebnis anzeigt, ob jedes der Vielzahl von Daten der Wartungsinformationen innerhalb des Spezifikationsbereichs liegt oder nicht.

2. Tragbare Endvorrichtung nach Anspruch 1, wobei
die Eingabevorrichtung eine fotografische Vorrichtung enthält, welche ein durch den Drucker zu druckendes Blatt fotografiert, um die Wartungsinformationen einzugeben.

3. Tragbare Endvorrichtung nach den Ansprüchen 1 bis 2, wobei
die Kommunikationsvorrichtung das Senden/Empfangen mit einem externen Server zum Speichern der Wartungsinformationen durchführt;
die Steuerung oder Regelung das Senden der Wartungsinformationen durch die Kommunikationsvorrichtung so steuert oder regelt, dass sie die Wartungsinformationen in dem externen Server speichert; und
die Steuerung oder Regelung das Empfangen der Wartungsinformationen durch die Kommunikationsvorrichtung so steuert oder regelt, dass sie die Wartungsinformationen eingibt, welche vorher in dem externen Server gespeichert sind.

4. Tragbare Endvorrichtung nach einem der Anspruch 1 bis 3, wobei
die Wartungsinformationen eine Vielzahl von Zustandsinformationen, welche jeweilige Zustände einer Vielzahl von in dem Drucker enthaltenen Bestandteilen angeben, und Zählerinformationen einer Vielzahl von in dem Drucker enthaltenen Bestandteilen enthalten.

5. Tragbare Endvorrichtung nach Anspruch 4, wobei
die Eingabevorrichtung die Wartungsinformationen in Form einer Folge von Daten eingibt, in der eine Vielzahl von Daten, welche die Zustandsinformationen angebende Daten und die Zählerinformationen angebende Daten enthalten, gesammelt sind.

6. Tragbare Endvorrichtung nach Anspruch 5, wobei
die die Zustandsinformationen angebenden Daten der Wartungsinformationen Häufigkeitsdaten enthalten, welche eine Anzahl von Malen des Schneidens eines Blatts durch eine Schneidvorrichtung, welche der Bestandteil des Druckers ist, angeben.

7. Tragbare Endvorrichtung nach einem der Ansprüche 5 bis 6, wobei
die die Zustandsinformationen angebenden Daten der Wartungsinformationen Daten enthalten, welche einen Widerstandswert jedes einer Vielzahl von Wärme erzeugenden Elementen eines Thermodruckkopfs, welcher der Bestandteil des Druckers ist, angeben.

8. Tragbare Endvorrichtung nach einem der Ansprüche 3 bis 7, wobei
die Kommunikationsvorrichtung die Wartungsinformation, welche vorher in dem externen Server gespeichert sind, als frühere Wartungsinformationen empfängt, welche einen Zustand des Druckers vor einem Zustand des Druckers, welchen die Wartungsinformationen angeben, angeben.

9. Tragbare Endvorrichtung nach Anspruch 8, wobei
die Steuerung oder Regelung die empfangenen früheren Wartungsinformationen analysiert;
die empfangenen früheren Wartungsinformationen, ausgehend von diesem Analyseergebnis, in ein zur Anzeige auf der Anzeigevorrichtung geeignetes Format umwandelt; und
die Anzeigevorrichtung so steuert oder regelt, dass sie die umgewandelten früheren Wartungsinformationen auf der Anzeigevorrichtung anzeigt.

10. Tragbare Endvorrichtung nach Anspruch 6, wobei der Spezifikationsbereich ein oberer Grenzwert einer normalen Zeit ist, welche zum Abschneiden eines Blattes durch die Schneidvorrichtung erforderlich ist.

11. Tragbare Endvorrichtung nach Anspruch 7, wobei der Spezifikationsbereich ein Bereich ist, welcher durch einen oberen Grenzwert und einen unteren Grenzwert des Widerstandswerts in einem Bereich spezifiziert ist, in dem das Druckverhalten jedes in dem Thermodruckkopf enthaltenen Punkts sich nicht verschlechtert.

12. Tragbare Endvorrichtung nach Anspruch 6, wobei die Zählerinformationen eine Anzahl von Malen des Abschneidens eines Blattes durch die Schneidvorrichtung sind und der Spezifikationsbereich ein oberer Grenzwert der Anzahl von Malen ist, welcher durch Abschätzen einer Lebensdauer der Schneidvorrichtung oder eines Motors des Druckers bestimmt ist.

13. Tragbare Endvorrichtung nach Anspruch 7, wobei die Zählerinformationen eine Anzahl von durch den Thermodruckkopf gedruckten Zeilen sind und der Spezifikationsbereich ein oberer Grenzwert der Zeilen ist, welcher durch Abschätzen einer Lebensdauer des Thermodruckkopfs bestimmt ist.

14. Steuerverfahren oder Regelverfahren zur Verwaltung eines Druckers mit einer tragbaren Endvorrichtung, wobei das Verfahren umfasst:
Eingeben von Wartungsinformationen, welche einen Zustand des Druckers angeben, von dem Drucker in die tragbare Endvorrichtung;
Analysieren der eingegebenen Wartungsinformationen mit der tragbaren Endvorrichtung;
Umwandeln der eingegebenen Wartungsinformationen durch die tragbare Endvorrichtung in ein zur Anzeige auf der Anzeigevorrichtung geeignetes Format, ausgehend von diesem Analyseergebnis; und
Anzeigen der umgewandelten Wartungsinformationen auf der Anzeigevorrichtung der tragbaren Endvorrichtung;
**dadurch gekennzeichnet, dass** das Verfahren ferner umfasst:
Speichern von Referenzdaten, welche für jedes der Vielzahl von Daten der Wartungsinformationen einen Spezifikationsbereich des Druckers angeben, welcher ein Wert ist, der für jedes der Vielzahl von Daten der Wartungsinformationen als ein Bereich festgelegt ist, in dem der Drucker normalerweise arbeiten kann, in der tragbaren Endvorrichtung;
Vergleichen jedes der Vielzahl von Daten der Wartungsinformationen mit den in der Speichervorrichtung gespeicherten Referenzdaten; und
Anzeigen, ob jedes der Vielzahl von Daten der Wartungsinformationen innerhalb des Spezifikationsbereichs liegt oder nicht, als dieses Vergleichsergebnis.

15. Druckersystem, umfassend
einen Drucker; und
ein tragbares Endgerät zur Verwaltung des Druckens und umfassend:
ein Eingabemittel, welches dafür konfiguriert ist, Wartungsinformationen, welche einen Zustand des Druckers angeben, von dem Drucker eingeben, wobei die Eingabevorrichtung eine Kommunikationsvorrichtung zum Empfangen der von dem Drucker durch drahtlose Kommunikation gesendeten Wartungsinformationen enthält;
ein Anzeigemittel, welches dafür konfiguriert ist, Wartungsinformationen des Druckers anzuzeigen; und
ein Steuerungsmittel oder Regelungsmittel, welches dafür konfiguriert ist:
die eingegebenen Wartungsinformationen zu analysieren,
die eingegebenen Wartungsinformationen, ausgehend von diesem Analyseergebnis, in ein zur Anzeige auf der Anzeigevorrichtung geeignetes Format umzuwandeln, und
die Anzeigevorrichtung so zu steuern oder zu regeln, dass sie die umgewandelten Wartungsinformationen als die Verwaltungsinformationen des Druckers auf der Anzeigevorrichtung anzeigt;
**dadurch gekennzeichnet, dass** die tragbare Endvorrichtung ferner umfasst:
eine Speichervorrichtung zum Speichern von Referenzdaten, welche für jedes der Vielzahl von Daten der Wartungsinformationen einen Spezifikationsbereich des Druckers angeben, welcher ein Wert ist, der für jedes der Vielzahl von Daten der Wartungsinformationen als ein Bereich festgelegt ist, in dem der Drucker normalerweise arbeiten kann;
und dass:
die Steuerung oder Regelung jedes der Vielzahl von Daten der Wartungsinformationen mit den in der Speichervorrichtung gespeicherten Referenzdaten vergleicht; und
die Anzeigevorrichtung als dieses Vergleichsergebnis anzeigt, ob jedes der Vielzahl von Daten der Wartungsinformationen innerhalb des Spezifikationsbereichs liegt oder nicht.

## Revendications

1. Terminal portable destiné à gérer une imprimante, comprenant :
un dispositif d'entrée qui délivre des informations de maintenance indiquant un état de l'imprimante à partir de l'imprimante ;
un dispositif d'affichage ; et
une unité de commande qui analyse les informations de maintenance entrées, convertit les informations de maintenance entrées, dans un format approprié à l'affichage sur le dispositif d'affichage, sur la base de ce résultat d'analyse, et commande l'affichage de manière à afficher les informations de maintenance transformées sous forme d'informations de gestion de l'imprimante sur le dispositif d'affichage ;
dans lequel le dispositif d'entrée comporte un dispositif de communication destiné à recevoir les informations de maintenance à transmettre à partir de l'imprimante par une communication sans fil,
**caractérisé en ce que** ledit terminal portable comprend, en outre :
un dispositif de mémorisation destiné à mémoriser des données de référence indiquant une plage de spécifications de l'imprimante pour chacune de la pluralité de données des informations de maintenance, qui représentent un ensemble de valeurs pour chacune de la pluralité de données des informations de maintenance comme une plage dans laquelle l'imprimante peut fonctionner normalement, et
**en ce que** :
l'unité de commande compare chacune de la pluralité de données d'informations de maintenance avec les données de référence mémorisées dans le dispositif de mémorisation ; et
le dispositif d'affichage affiche le fait que chacune de la pluralité de données des informations de maintenance est ou non à l'intérieur d'une plage de spécifications, en tant que résultat de comparaison.

2. Terminal portable selon la revendication 1, dans lequel
le dispositif d'entrée comporte un dispositif photographique qui photographie une feuille à imprimer par l'imprimante, afin d'entrer les informations de maintenance.

3. Terminal portable selon les revendications 1 et 2, dans lequel
le dispositif de communication exécute une émission/réception avec un serveur externe afin de mémoriser les informations de maintenance ;
l'unité de commande commande l'émission des informations de maintenance par le dispositif de communication, afin de mémoriser les informations de maintenance dans le serveur externe ; et
l'unité de commande commande la réception des informations de maintenance par le dispositif de communication, afin d'entrer les informations de maintenance qui ont été mémorisées préalablement sur le serveur externe.

4. Terminal portable selon l'une quelconque des revendications 1 à 3, dans lequel
les informations de maintenance comportent une pluralité d'informations d'état indiquant les états respectifs d'une pluralité d'éléments constituants contenus dans l'imprimante, et des informations de comptage d'une pluralité d'éléments constituants contenus dans l'imprimante.

5. Terminal portable selon la revendication 4, dans lequel
le dispositif d'entrée entre les informations de maintenance sous la forme d'une série de données dans lesquelles une pluralité de données comportant des données indiquant les informations d'état et des données indiquant les informations de comptage sont collectées.

6. Terminal portable selon la revendication 5, dans lequel
les données indiquant les informations d'état des informations de maintenance comportent des données de nombre d'activation indiquant un nombre de coupes de feuille par un dispositif de coupe qui est l'élément constituant de l'imprimante.

7. Terminal portable selon l'une quelconque des revendications 5 à 6, dans lequel
les données indiquant les informations d'état des informations de maintenance comportent des données indiquant une valeur de résistance de chacun d'une pluralité d'éléments de production de chaleur d'une tête thermique qui est l'élément constituant de l'imprimante.

8. Terminal portable selon l'une quelconque des revendications 3 à 7, dans lequel
le dispositif de communication reçoit les informations de maintenance qui ont été mémorisées préalablement dans le serveur externe, en tant qu'informations de maintenance antérieures indiquant un état de l'imprimante avant un état de l'imprimante indiqué par les informations de maintenance.

9. Terminal portable selon la revendication 8, dans lequel l
'unité de commande analyse les informations de maintenance antérieures reçues ;
convertit les informations de maintenance antérieures reçues en format approprié pour l'affichage sur le dispositif d'affichage, sur la base de ces résultats d'analyse ; et
commande le dispositif d'affichage de manière à afficher les informations de maintenance antérieures converties sur le dispositif d'affichage.

10. Terminal portable selon la revendication 6, dans lequel la plage de spécifications est une valeur limite supérieure d'un temps normal requis afin d'assurer la coupe d'une feuille par le dispositif de coupe.

11. Terminal portable selon la revendication 7, dans lequel la plage de spécifications est une plage spécifiée par une valeur limite supérieure et une valeur limite inférieure de la valeur de résistance dans une plage dans laquelle les performances d'impression de chaque point contenu sur la tête thermique ne se détériore pas.

12. Terminal portable selon la revendication 6, dans lequel les informations de comptage sont un nombre de coupes de feuille par le dispositif de coupe et la plage de spécifications est une valeur limite supérieure du nombre d'activation déterminé en supposant une durée de vie du dispositif de coupe ou d'un moteur de l'imprimante.

13. Terminal portable selon la revendication 7, dans lequel les informations de comptage sont un nombre de lignes imprimées par la tête thermique et la plage de spécifications est une valeur limite supérieure du nombre de lignes déterminée en supposant une durée de vie de la tête thermique.

14. Procédé de commande destiné à gérer une imprimante avec un terminal portable, ledit procédé comprenant :
l'entrée dans ledit terminal portable d'informations de maintenance indiquant un état de l'imprimante à partir de l'imprimante ;
l'analyse avec ledit terminal portable des informations de maintenance entrées ;
la conversion par ledit terminal portable des informations de maintenance entrées dans un format approprié pour l'affichage du dispositif d'affichage sur la base de ce résultat d'analyse ; et
l'affichage des informations de maintenance converties sur le dispositif d'affichage dudit terminal portable ;
**caractérisé en ce que** ledit procédé comprend, en outre :
la mémorisation dans ledit terminal portable de données de référence indiquant une plage de spécifications de l'imprimante pour chacune de la pluralité de données des informations de maintenance, qui est un ensemble de valeurs pour chacune de la pluralité de données des informations de maintenance sous la forme d'une plage dans laquelle l'imprimante peut fonctionner normalement ;
la comparaison de chacune de la pluralité de données des informations de maintenance avec les données de référence mémorisées dans le dispositif de mémorisation ; et
l'affichage du fait que chacune de la pluralité de données des informations de maintenance est ou non comprise dans la plage de spécifications, en tant que résultat de comparaison.

15. Dispositif d'impression comprenant :
une imprimante ; et
un terminal portable destiné à gérer ladite imprimante et comprenant :
un moyen d'entrée configuré de manière à entrer des informations de maintenance indiquant un état de l'imprimante à partir de l'imprimante, ledit dispositif d'entrée comporte un dispositif de communication destiné à recevoir les informations de maintenance à transmettre à partir de l'imprimante par une communication sans fil ;
un moyen d'affichage configuré de manière à afficher des informations de gestion de l'imprimante ; et
un moyen de commande configuré de manière à ;
analyser les informations de maintenance entrées,
convertir les informations de maintenance entrées dans un format approprié pour l'affichage du dispositif d'affichage, sur la base de ce résultat d'analyse, et
commander l'affichage, de manière à afficher les informations de maintenance converties en tant qu'informations de gestion de l'imprimante sur le dispositif d'affichage ;
**caractérisé en ce que** ledit terminal portable comprend, en outre :
un dispositif de mémorisation destiné à mémoriser des données de référence indiquant une plage de spécifications de l'imprimante pour chacune de la pluralité de données des informations de maintenance, qui représentent un ensemble de valeurs pour chacune de la pluralité de données des informations de maintenance sous la forme d'une plage dans laquelle l'imprimante peut fonctionner normalement ;
et **en ce que** :
l'unité de commande compare chacune de la pluralité de données des informations de maintenance avec les données de référence mémorisées dans le dispositif de mémorisation ; et
le dispositif d'affichage affiche le fait que chacune de la pluralité de données des informations de maintenance est ou non comprise dans la plage de spécifications, en tant que résultat de comparaison.
